# EUROPEAN PATENT SPECIFICATION

(11) **EP 4 416 850 B1**
(45) Date of publication and mention of the grant of the patent: **20.08.2025**
(21) Application number: 21823860.8
(22) Date of filing: 01.12.2021
(51) Int. Cl.: H04B 3/52

(54) **HIGH VOLTAGE INSTALLATION COMPRISING A PLURALITY OF POWER ELECTRONIC CELLS AND WAVEGUIDE**
HOCHSPANNUNGSANLAGE MIT EINER VIELZAHL VON LEISTUNGSELEKTRONISCHEN ZELLEN UND WELLENLEITER
INSTALLATION HAUTE TENSION COMPRENANT UNE PLURALITÉ DE CELLULES ÉLECTRONIQUES DE PUISSANCE ET GUIDE D'ONDES

(43) Date of publication of application: 21.08.2024
(73) Proprietor: Hitachi Energy Ltd, 8050 Zürich (CH)
(72) Inventor: SCHROEDER, Arne, 3004 Bern (CH); LUVISOTTO, Michele, 723 34 Västerås (SE); NILSSON, Torsten, 72226 Västerås (SE)
(74) Representative: Epping - Hermann - Fischer
(86) International application number: PCT/EP2021/083750
(87) International publication number: WO 2023/098989

(56) References cited:
- EP-B1- 1 239 600
- WO-A1-2016/190975
- US-A1- 2020 099 107

## Description

The present disclosure relates to high voltage installation comprising a plurality of power electronic cells configured to operate at different electrical potentials and a waveguide configured to carry and shield HF communication signals of the plurality of power electronic cells.

Due to operational and safety considerations, different parts of high voltage installations are often connected using optical networks. It is an object of the present disclosure to describe alternative communication arrangements and their components for use in high voltage installations.

Document US 2020/099107 A1 provides a system for managing at least one sub-assembly of an electric battery, comprising a plurality of power storage cells. The system includes, for each power storage cell, a circuit for managing the state of the cell and a communication circuit, which is configured such that it receives and transmits data relative to the cell. The communication circuit is configured such that it transposes, over a carrier frequency in excess of 1 GHz, the data to be received and transmitted. The management system further includes, for each sub-assembly, a loss cable connecting the power storage cells of said sub-assembly. The loss cable acts as a waveguide and is coupled by capacitive coupling to the communication circuit of each power storage cell.

Document EP 1 239 600 B1 discloses a wireless communication system using a waveguide. A communication device for transmitting signals between a substation control unit and control units of bay elements comprise transceiving devices connected to the substation and the bay element control units, and a waveguide enclosing and connecting antennas of said transceiving devices. The transceiving devices produce electromagnetic radio frequency waves to communicate information between the control units. The waveguide protects the waves against interference.

Embodiments of the disclosure relate to a high voltage (HV) installation using high-frequency (HF) communication signals.

The invention is defined by independent claim 1. Other preferred embodiments may be found in the dependent claims. Further details of the disclosed methods, devices and system are provided in the following, which are helpful for understanding the claimed invention.

The HV installation comprises a plurality of power electronic cells, namely power electronic switching cells, configured to operate at different electrical potentials, each power electronic cell comprising a cell-side transceiver with an antenna for receiving and/or transmitting HF communication signals, and
a waveguide configured to carry and shield HF communication signals of the plurality of power electronic cells. The waveguide has a plurality of sections configured to leak HF communication signals present in the waveguide into a corresponding plurality of adjoining areas and vice versa. Each power electronic cell of the plurality of power electronic cells is arranged physically separated and in proximity to the waveguide, such that the respective power electronic cell is electrically insulated from the waveguide and the antenna of the respective cell-side transceiver is arranged in the respective adjoining area.

Such an arrangement is particularly useful for transmitting and shielding high frequency communication signals in distributed HV applications, such as different cells of a substation operating at different voltage potentials. Among others, the inventors have discovered that by physically separating the power electronic cells from a leaky waveguide, i.e. a waveguide comprising sections configured to leak HF communication signals present in the waveguide into a corresponding plurality of adjoining areas and vice versa, various forms of HF wireless communication system can be applied in HV installations, wherein different power electronic cells operate at different electrical potentials and therefore need to be insulated from one another.

Compared to free-space, unshielded wireless communication techniques, the used communication channel can be protected from outside disturbances, such as network jammers, to protect critical parts of an electrical network. At the same time, the relatively high installation effort required for installing dedicated optical links between cells of a HV installation can be avoided.

According to a further embodiment, the waveguide is
configured to carry HF communication signals having a carrier frequency in excess of 1 GHz, preferably in excess of 10 GHz, and/or below 300 GHz and/or having a wide bandwidth in excess of 20 or 50 MHz or in excess of 2 GHz.

Microwave band electromagnetic signals in excess of several GHz are highly attenuated in conventional free space communication. However, within waveguides they can propagate over distances typically incurred in HV installations, e.g. tenth to hundreds of meters without significant attenuation. Use of such high frequencies signals therefore helps to protect communication signals from outside disturbances as any source of interference would have to be located very close to the HV installation, making deliberate attacks very difficult and remote attacks practically infeasible for physical limitation placed on the required transmission power.

The use of waveguides also makes further frequency resources available for controlling and monitoring power electronic cells. Enabling broader bandwidth in turn enables to carry multiple HF communication signals having different carrier frequencies in parallel, which allows to increase at least one of the communication signal transmission redundancy and/or to reduce a communication signal transmission delay by transferring multiple communication signals in parallel using different carrier frequencies.

HF communication signals may be exchanged directly between two or more of the plurality of power electronic cells, e.g. in a peer-to-peer architecture, or between one of the power electronic cells and at least one control hub coupled to the waveguide using at least one hub-side transceiver.

For example, a control hub may generate HF control signals for the power element cells, such as firing signals and/or synchronization signals, and/or receive HF operating status signals from the power element cells, such as logging signals, fault recording signals and/or health monitoring signals.

In at least one embodiment, the at least one hub-side transceiver may be attached to a first terminal section of the waveguide and may be connected to the at least one control hub using an optical fiber network, such that the waveguide is electrically insulated from the at least one control hub. In this way, greater voltage differences between the control hub and the individual power electronic cells may be realized, for example by connecting the waveguide to an intermediate voltage level.

In different embodiments, redundant communication channels between the plurality of power electronic cells and at least one control hub may be created by using multiple parallel waveguides, multiple cell-side transceivers, multiple hub-side transceivers and/or multiple control hubs.

For certain applications, such as high voltage direct current (HVDC) converters, the plurality of power electronic cells may be divided into N subgroups, with each of the subgroups being connected via a different one of N waveguides. In this case, different cell subgroups and their waveguides can be operated at different voltage levels, e.g. an average voltage level of the subgroup of cells, to minimize the required distance between the respective waveguide and the individual power electronic cells to a minimum.

In at least one embodiment, at least one of the antennas of the cell-side transceivers is configured as a first directional antenna and/or at least one of the plurality of sections of the waveguide comprises a second directional antenna. Use of directional antennas reduces unwanted crosstalk between individual power electronic cells and thereby improves the signal to noise ratio. It also makes it more difficult to disturb the communication from the outside, for example using a jammer. Moreover, it enables greater distances between the waveguide and the respective power electronic cells for a given carrier frequency.

Directional antennas may be formed as patch antennas, array antennas, leaky array antennas, horn antennas, or any other type of antenna forming a directed, anisotropic electrical field.

To enable the desired leaking of the HF communication signals and, optionally, to obtain a desired shape of the leaked electrical field, each section of the plurality of sections of the waveguide may comprise at least one opening, in particular one of a slit, a row of holes, or an array of holes, which are configured to leak the HF communication signals into the corresponding plurality of adjoining areas.

Such openings or the antennas of the HV installation may be protected from environmental influences using protective elements, such as a radome covering the antennas and/or a dielectric lenses covering at least one opening in at least one of the plurality of leaky sections. Such protective elements may also be used for field shaping, such as improving the directionality of the antenna or opening underneath the protective element. Radomes and dielectric lenses may also exhibit a frequency selectivity. For example, frequencies in a certain band, e.g. used for exchanging the HF communication signals with the power electronic cells, can pass and other frequencies can be attenuated or blocked.

A body of the waveguide may be formed by different types of waveguides, such as a hollow metallic waveguide, a dielectric waveguide, a coaxial cable, or a stripline waveguide. Such types of waveguides are widely available and may be adapted, for example by the addition of opening as detailed above, to leak HF communication signals carried therein into desired areas adjoining the waveguide.

Further advantageous embodiments of the present disclosure are disclosed in the attached set of claims as well as in the following detailed description of embodiments.

The accompanying figures are included to provide a further understanding. In the figures, elements of the same structure and/or functionality may be referenced by the same reference signs. It is to be understood that the embodiments shown in the figures are illustrative representations and are not necessary drawn to scale.
Figure 1 shows, in a schematic manner, a HV installation comprising multiple power electronic cells and a leaky waveguide.
Figure 2 shows a more detailed view of the coupling between a leaking section of the waveguide and a power electronic cell.
Figures 3 and 4 shows the attenuation of HF communication signals in a waveguide and in free space, respectively.
Figure 5 shows different configurations of a leaky waveguide with openings in a linear arrangement.
Figure 6 shows different configurations of a leaky waveguide with openings in a non-linear arrangement.
Figure 7 shows a HV installation comprising a central control hub, a common leaky waveguide and a plurality of power electronic cells.
Figure 8 shows a HV installation comprising a central control hub, multiple leaky waveguides and corresponding subgroups of power electronic cells.
Figure 9 shows an internal structure of one power electronic cell comprising multiple devices.
Figure 10 shows different approaches for establishing redundant communication channels in a HV installation.
Figure 11 shows an undesired multipath coupling between a leaky waveguide and multiple power electronic cells.
Figure 12 shows different radiation patterns of non-directional and directional antennas.
Figure 13 shows different configurations of directional antennas.
Figure 14 shows the mounting of a directional antenna underneath a radome.
Figure 15 shows the embedding of a HF lens into an opening of a leaky waveguide.
Figure 16 shows a leaky waveguide having multiple directional couplings.

High voltage direct current (HVDC) and flexible alternating current transmission systems (FACTS) converter stations comprise several power semiconductor switching cells. These switching cells are arranged within valve structures in case of HVDC systems or power electronic building blocks (PEBB) in case of FACTS. In each case, each power electronic cell is connected to a control unit via a high speed, real-time communication network. The communication between the control unit and the individual cells and the electronic devices comprised therein includes gate firing signals, operating status signals and cell monitoring signals, for example.

The term high voltage (HV) may refer to any voltage in excess of 1 kV used in energy distribution networks. For example, it may refer to medium voltage, high voltage, extra high voltage or ultra-high voltage energy distribution networks having a rated operating voltage in excess of 1 kV, 60 kV, 220 kV, or 800 kV for example. It is useful in substations or converter stations operating, for example, at 10 kV, 15 kV, 18 kV, 20 kV or 30 kV or similar voltages in the range of 6 kV to 150 kV or even above this voltage level.

As part of the operating environments and the power electronic building blocks used for switching different electrical pathways, differences in the electrical potential between individual cells commonly occur, which need to be bridged by communication signals. To comply with corresponding insulation requirements, communication signals so far have been communicated via insulating optical fiber links. However, implementing an optical fiber link network, in particular in relatively complicated network topologies, is very labor and cost intensive and needs to be configured and manually connected to each devices of each cell.

At the same time, conventional, e.g. radio-link, wireless communication systems, such as WiFi networks according to the IEEE 802.11 series of standards, are not suitable for the specific application area of HV installations. This is in part because radio signals can be distorted and attenuated by the metallic structures of HV equipment, or disturbed by neighboring communication, such as neighboring WiFi networks. Moreover, the use of a conventional wireless communication system may present a weakness in a corresponding part of the infrastructure. In particular, the use of a wide spectrum jammer could be used to effectively block firing signal, thus deactivating the corresponding converter station.

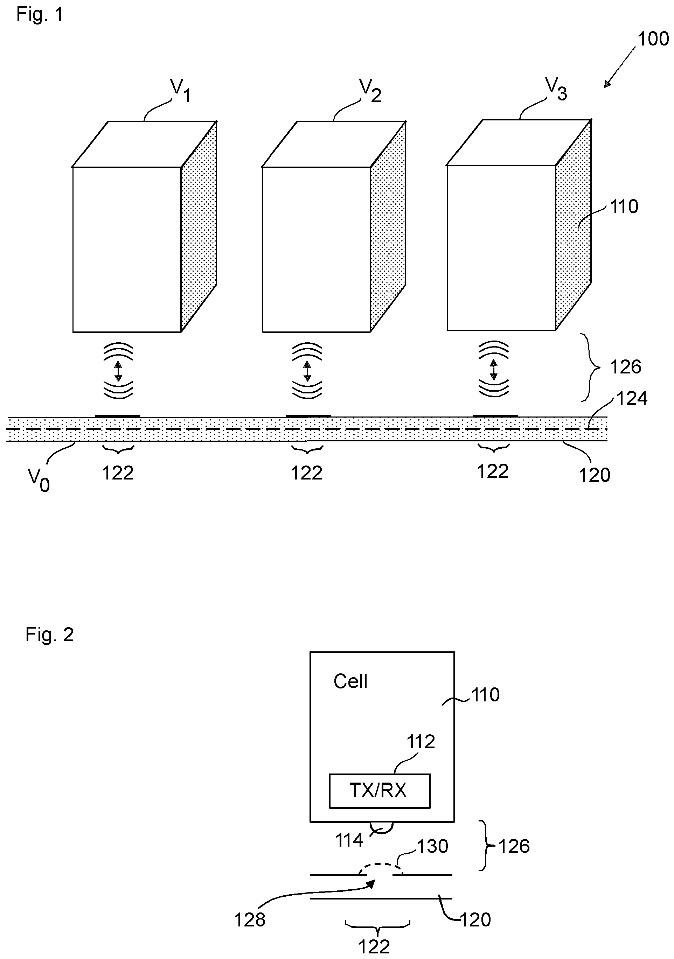

Figure 1 shows a first HV installation 100 comprising three power electronic cells 110 and one waveguide 120. Each one of the power electronic cells 110 may be arranged on a different electrical potential, e.g. V₁ to V₃. Moreover, the waveguide 120 may be arranged on another electrical potential, e.g. V₀.

The waveguide 120 comprises sections 122 configured to leak at least some of the HF signal carried inside the waveguide 120 to its outside and vice versa. Thus, the waveguide 120 may be referred to as "leaky waveguide" and the sections 122 may be referred to as "leaky sections".

In the depicted embodiment, the leaky sections 122 are arranged at regular intervals from each other and opposite the locations of the individual power electronic cells 110. An HF communication signal 124 travelling within the waveguide 120 leaks out towards the respective power electronic cells 110 in the sections 122. As a consequence, a local electrical field is created in adjoining areas 126, in which the HF communication signal 124 can be picked up by the power electronic cells 110. In other areas, for example on the opposite side of the waveguide 120 or between the leaky sections 122, the HF communication signal 124 has such a low signal strength that it cannot be received with a conventional receiver or transceiver. Inversely, from the positions of the respective power electronic cells 110, it is possible to couple HF communication signals through the leaky sections 122 into the waveguide 120. Injection of HF signals from other areas and/or directions into the waveguide 120 is infeasible due to a very low coupling coefficient.

Figure 2 shows the HF signal coupling between the waveguide 120 and the power electronic cell 110 in more detail. As can be seen in Figure 2, the power electronic cells 110 comprise at least one transceiver 112, which in turn is connected to an antenna 114. The antenna 114 is arranged at a side of the power electronic cell 110 facing the leaky section 122 of the waveguide 120. In the depicted embodiment, the waveguide 120 comprises an opening 128 there, facing the antenna 114. That is to say, the opening 128 or other leaky part of the waveguide 120 and the cell-side antenna 114 are arranged opposite to each other and are configured to exchange HF signals over the relative short air gap between them, used to electrically insulate the cell 110 from the waveguide 120.

As further indicated in Figure 2, the opening 128 may be protected by a radome 130 to protect the inside of the waveguide 120 from environmental influences, such as moisture or dirt. This is particularly useful in an outdoor environment.

The HF communication signals 124 exchanged between the antenna 114 and the waveguide 120 may have a very high carrier frequency and/or bandwidth. Use of so-called super high frequency (SHF, 3-30 GHz) and extremely high frequency (EHF, 30-300 GHz) signals has the advantage that the respective communication signals 124 are attenuated rapidly in air or other environments, such as a free space (vacuum) or protective gas, and this effectively prevents or at least limits their disturbance.

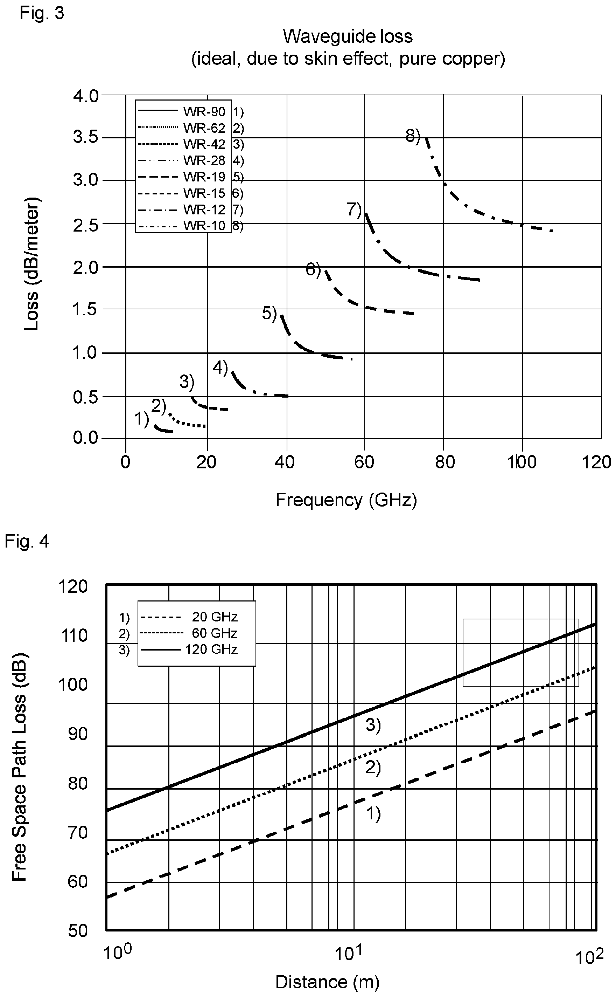

As shown in Figure 4, any signal source placed outside a power station, e.g. tens to hundred meters away, will face significant signal attenuation. For example, at a distance of 100 m, the free space path loss of 20 GHz, 60 GHz and 120 GHz communication signals lies at or exceeds 100 dB. Accordingly, very powerful signal sources would be required to disturb such corresponding SHF or EHF signals from a reasonable distance, making a potential jamming of the HF communication signals 124 from outside practically unfeasible.

In contrast, as shown in Figure 3, the signal loss of HF communication signals 124 in different frequency ranges between 10 and 100 GHz inside an appropriate waveguide is relatively good. Depending on the frequency used and the type of the waveguide employed, signal attenuation lies only between 0.1 and about 3 dB per meter of length of the used waveguide. Thus, successful communication within a typical high voltage installation with waveguide length of several meters to several tens of meters using HF communication signals 124 is possible. The additional attenuation in the free space between the leaky waveguide 120 and the antenna 114 of the respective power electronic cell 110 is relatively low, as typically only a few centimeters to a few tens of centimeters needs to be bridged.

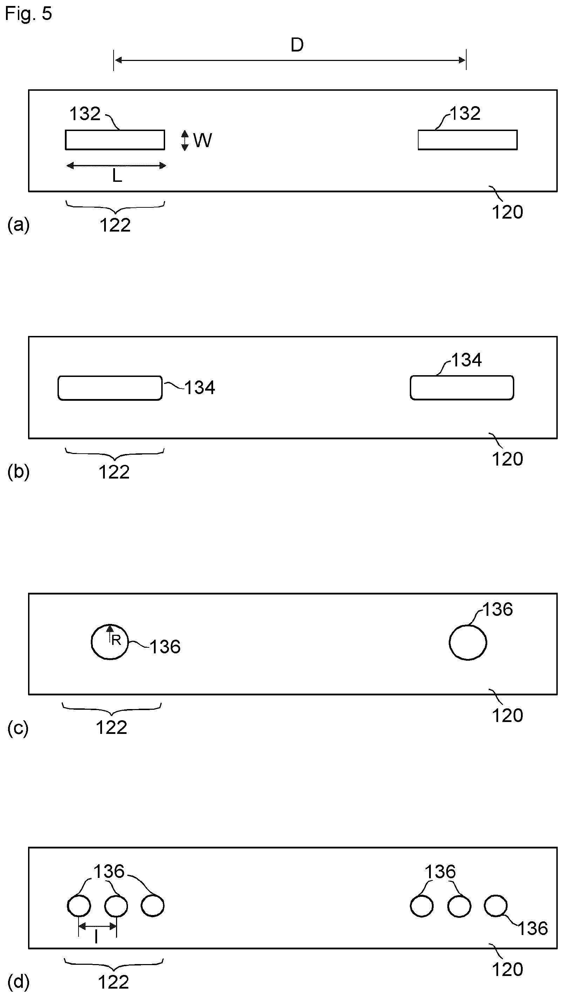

Figure 5 shows different configurations of leaky sections 122 of different waveguides 120 arranged in linear fashion, i.e. along a common axis corresponding to the main axis of the waveguide 120. The leaky sections 122 are arranged at a distance D from each other, for example with respect to their centers as shown in Fig. 5.

Figure 5 (a) shows a single rectangular slit 132 arranged within each leaky section 122. Figure 5 (b) shows a single rounded slit 134, i.e. a slit with rounded corners. In each case, the frequency and spatial characteristic of the leaked electrical field can be influenced by the dimension of the slits 132 and 134, in particular, their length L and width W.

Figure 5 (c) shows another configuration of a leaky waveguide 122, wherein in each leaky section 122 a single circular hole 136 is provided. Figure 5 (d) shows yet another configuration of a waveguide 120, wherein in each leaky section 122 a row of holes 136 is provided. In the depicted embodiment, three circular holes 136 are arranged in a single row at periodic intervals I. In this case, the transmission characteristics of the leaky sections 122 are essentially defined by the radius R of the hole 136, and optionally, by the number of holes and their interval I. Similarly, a one dimensional arrangement of slits may be used in each leaky section 122 (not shown).

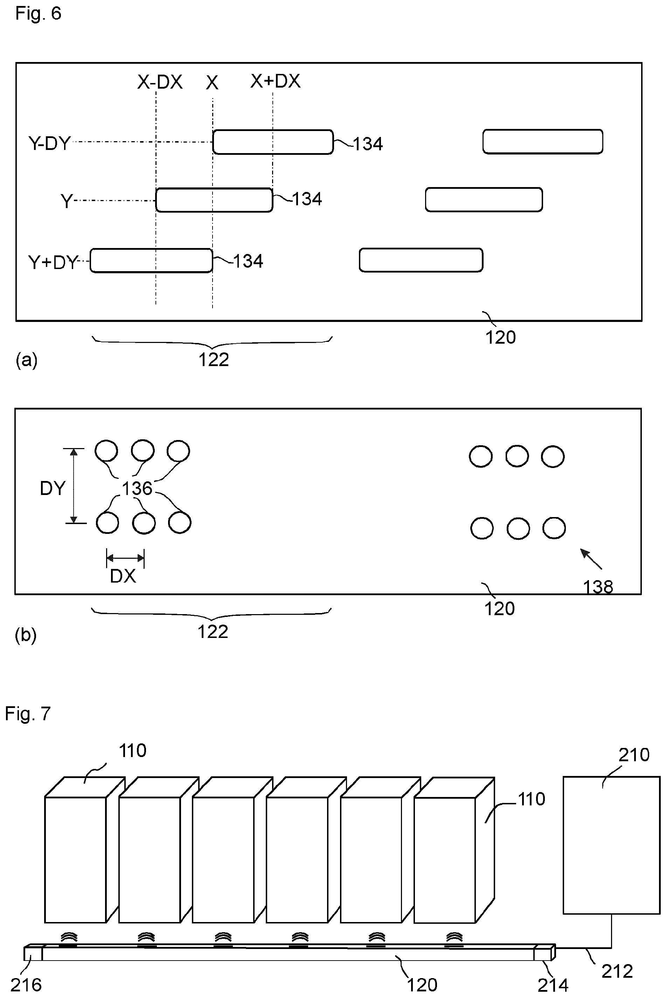

Figure 6 shows further configurations of leaky sections 122 of different waveguides 120 arranged in a non-linear or multi-dimensional fashion.

In Figure 6 (a), three rounded slots 134 are arranged slightly offset in a direction perpendicular to the main direction of the waveguide 120 and its normal surface, i.e. the direction into which it leaks. In the example shown in Figure 6, the middle slot 134 is arranged in a central position X, Y of the leaky section 122. The rounded slots 134 on either side of the central slot 134 are arranged at position X-DX and X+DX respectively along the main direction and at positions Y-DX and Y+DY in the perpendicular direction, as shown.

In the configuration of the waveguide 120 shown in Figure 6 (b), a two-dimensional array of circular holes 136 is provided in each leaky section 120. In particular, two rows of three circular holes 136 each are provided in each section 122. In the depicted embodiment, these are spaced by first distance DX in the main direction from each other and by a second distance DY in a second, orthogonal direction. The distances DX and DY may be the same or may be different. As detailed later, the provision of an array 136 of holes 136 essentially implements a leaky array antenna 138 which has directional properties.

Figure 7 shows a second HV installation 200 comprising a total of six power electronic cells 110, a common, linear waveguide 120 and a control hub 210. The control hub 210 is connected by a communication link 212, such as a wired or optical network with a hub-side transceiver 214. The hub-side transceiver 214 is arranged at a first terminal section of the linear waveguide 120 and is used for feeding control signals into the waveguide 120 and receiving operating status signals from the waveguide 120. The hub-side transceiver 214 may include some additional HF amplifier to boost the signal power. At an opposite, second terminal section of linear waveguide 120, a termination element 216 is provided, which avoids unwanted reflections of the HF communication signal 124 within the waveguide 120. In the case that the individual semiconductor switches arranged within the power electronic cells 110 are arranged in cabinet housings, the waveguide 120 can be arranged below or above the respective cabinets without touching or being electrically connected to them.

In the architecture shown in Figure 7, the control hub 210 can communicate with each one of the power electronic cells 110 by exchanging HF communication signals 124 between the hub-side transceiver 214 and the respective cell-side transceivers 112 (not shown in Figure 7). In addition, the individual power electronic cells 110 can also communicate directly with each other by exchanging HF communication signals 124 between respective cell-side transceivers 112 through the waveguide 120.

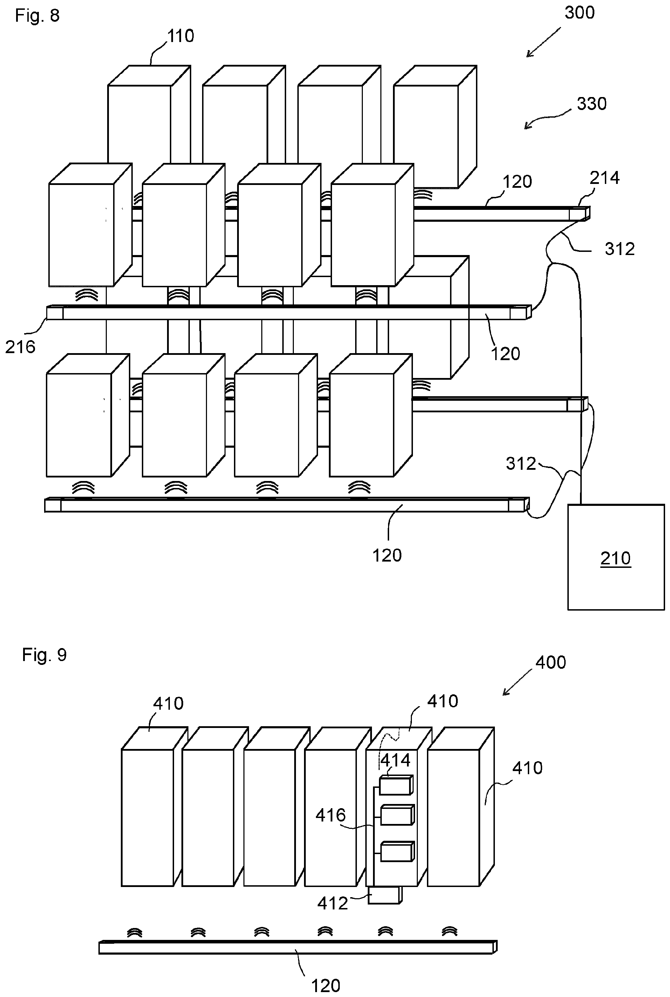

The second HV installation may be used to control the switching of semiconductor cells in a converter, such as a HVDC or FACTS converter. In this application, the voltage potentials of the individual switching power electronic cells 110 of the converter oscillate around a common voltage, such as electrical ground. Accordingly, the waveguide 120 may be connected to such a common potential, in particular electrical ground. In this case, the waveguide 120 can be connected to the control hub 210 using a wired network. Figure 8 shows a third high voltage installation 300 comprising a total of 16 power electronic cells 110 arranged in four subgroups 330 of four cells 110 each. Each subgroup 330 comprises a separate waveguide 120, which is essentially configured in a similar way as the waveguides 120 described above. The different waveguides 120 of the four subgroups 330 each have a corresponding hub-side transceiver 214, which is connected by respective optical fiber link 312 to a common control hub 210.

The HV installation 300 of Figure 8 may be a HVDC installation, in which switching cells are arranged in groups of stacked layers, also referred to as valve structures. One leaky waveguide 120 is provided for each row of switching cells 110, also referred to as a module in this context. As each module waveguide 120 will reside on an individual electrical potential, the transceivers 214 are connected to a valve control unit in the control hub 210 on an electrical ground potential via an optical backbone formed by the fiber links 312.

Figure 9 shows a fourth HV installation 400 comprising six power electronic cells 110 and a waveguide 120 as described before. The HV installation 400 may represent an enhanced converter with active energy storage, such as a HVDC or FACTS converter. The waveguide 120 may be used for communication between a main controller (not shown in Figure 9) and local control units 412 arranged at a top or bottom of corresponding energy storage cabinets 410. The local control units 412 can then communicate with individual storage units 414, such as supercapacitors, through a local wired network 416. Similar to the converter described with reference to Figure 7, the waveguide 120 can be electrically connected to a ground potential and be installed below or above the cabinets 410 housing the storage units 414.

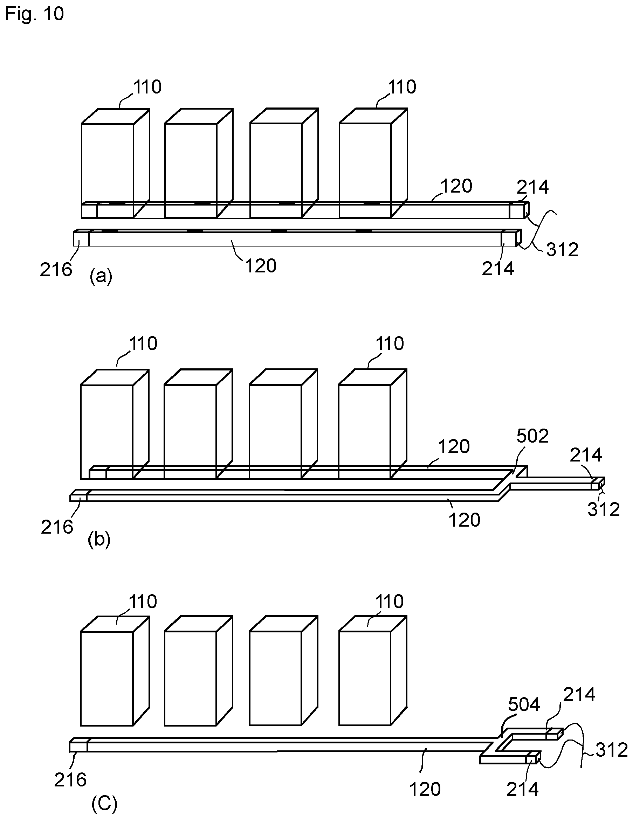

Figure 10 shows three different approaches for creating redundant communication channels in one of the HV installations described before.

In the situation depicted in Figure 10 (a), two redundant waveguides 120 are arranged in parallel below or above a corresponding power electronic cell 110. The power electronic cells 110 and the two (or more) waveguides 120 are arranged in such a way that one or more antennas 114 of a cell-side transceiver 112 may receive HF communication signals 122 from each one of the waveguides 120.

Figure 10 (b) shows another approach to achieve redundancy with regard to the waveguides 120. In the depicted example, two essentially linear waveguides 120 are adjoined by a T-junction 502 to receive signals from and forward signals to a single hub-side transceiver 214. In this way, the provision of an additional transceiver 214 can be avoided.

Figure 10 (c) shows yet another approach for achieving redundancy. In this embodiment, two redundant hub-side transceivers 214 are connected to two parallel terminal sections of a common waveguide 120. To feed the signals from both of the hub-side transceivers 214 into the common part of the waveguide 120 where the power electronic cells 110 are arranged, the respective terminal sections are joined by an (inverse) T-junction 504.

In the configurations shown in Figures 10 (a) and (c), two waveguides 120 are connected by respective hub-side transceivers 214 and optical fiber links 312 to a common control hub (not shown). However, to further improve redundancy, it is also possible to connect each one of the transceivers 214 to a separate, redundant control hub. Similarly, more than one cell-side transceiver 112 and/or antenna 114 may be employed for each power electronic cells 110.

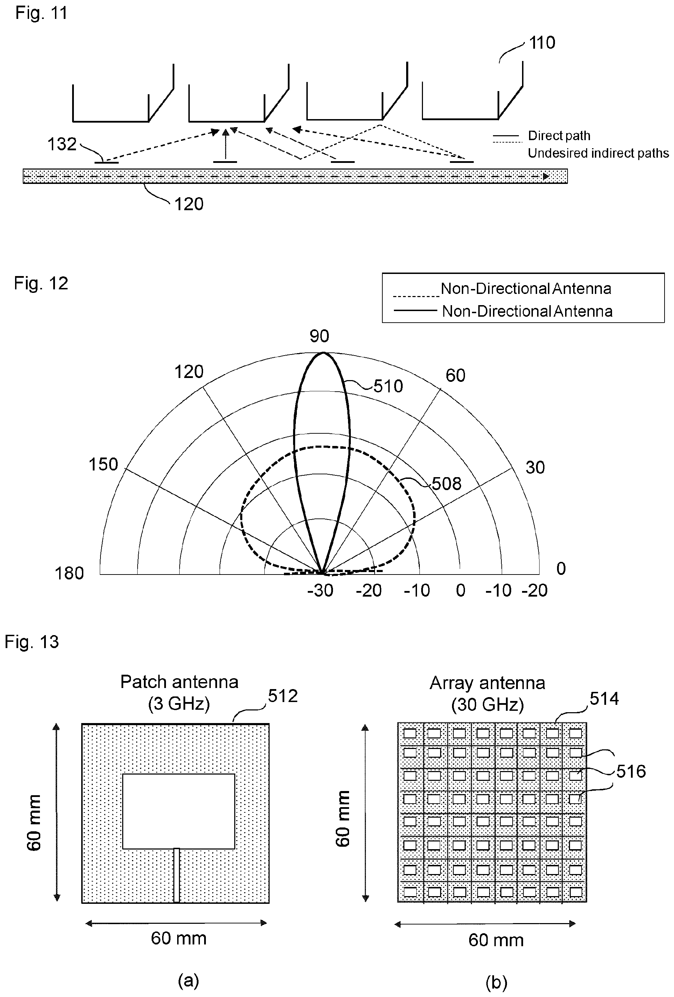

As described before, the signal attenuation in free-space is quite high, in particular for SHF and EHF communication signals 124, limiting unwanted coupling between neighboring areas 126. However, at lower operating frequencies and/or larger distances between the individual power electronic cells 110 and waveguide 120, some undesired multipath propagation may occur as shown in Figure 11. This may be the case when the distance between the waveguide 120 and individual power electronic cells 110 has to be increased, for example due to particularly high voltage potentials of the individual power electronic cells 110 with respect to the electrical potential of the waveguide 120.

A single slot 132 in each leaky section 122 of the waveguide 120 as shown in Figure 11 provides a rather wide radiation pattern, which can cause crosstalk between the neighboring leaky waveguide sections 122 and cell-side transceivers 112, which in turn downgrades the communication performance. To reduce such crosstalk, directional antennas may be used instead. In this context, Figure 12 shows the respective radiation pattern of a non-directional antenna 508 and a directional antenna 510. A directional antenna 510 may be formed on the leaky section 122 of the waveguide 120, may be connected to the cell-side transceivers 112, or both.

Figure 13 shows possible implementations for directional antenna 510. In particular, Figure 13(A) shows a patch antenna 512 of dimensions 60x60 mm for communication in a 3 GHz frequency range. Figure 13(B) shows an area antenna 514 with a total of 64 antenna elements 516 arranged in eight rows and eight columns having essentially the same dimension and configured for a carrier frequency of 30 GHz. The directional antennas 510 may be connected to the cell-side transceivers 112 in a conventional manner.

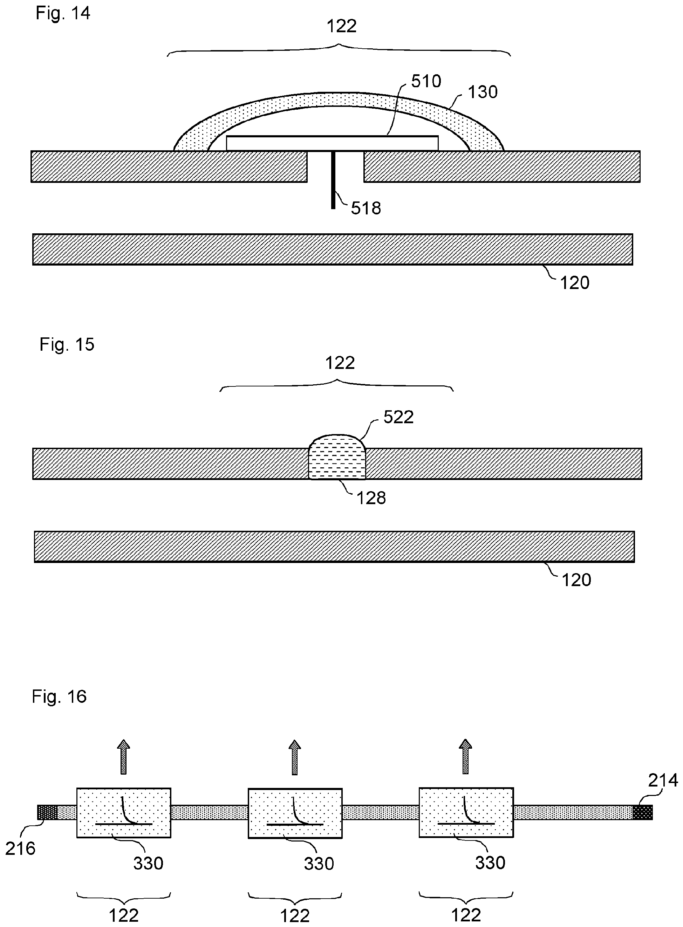

Figure 14 further shows how such a directional antenna 510 may be attached to a leaky section 122 of a waveguide 120. As shown in Figure 14, an antenna like signal pick-up element 518 extends from the directional antenna 510 towards the inside of the waveguide 120. The signal pick-up element 518 picks up the HF communication signal 124 propagating through the waveguide and emits a corresponding electromagnetic signal towards the power electronic cell 110 (not shown in Figure 14).

In the embodiment shown in Figure 14, the directional antenna 510 is arranged below a radome 130, which protects the antenna 510 and the inside of the waveguide 120 from outside elements, such as moisture, dirt or hazardous substances. The radome 130 may also act as a high frequency lens and enhance the directivity of the directional antenna 510 arranged below.

Figure 15 shows another protection mechanism for a waveguide 120 using a single opening 128 to leak an HF communication signal 124 in section 122 of the waveguide 120. In this case, the opening 128 is sealed by an HF lens 522. The HF lens 522 also serves as a field shaping element and may focus the leaked electromagnetic field on a corresponding antenna 114 of a cell-side transceiver 112 (not shown).

Figure 16 shows another embodiment of a waveguide 120 having several leaky sections 122. The leaky sections 122 described so far were non-directional and allowed both cell-to-cell communication as well as cell-to-hub communication. In the configuration shown in Figure 16, directional couplers 530 are employed. The directional couplers 530 facilitate selected propagation of HF communication signals 124 from a hub-side transceiver 214 towards each of three cell-side transceivers 112 arranged in the respective leaky sections 122 and vice versa. However, practically no signal propagation takes place in the opposite direction, e.g. from one of the leaky sections 112 towards a second terminal section of the waveguide 120 where a termination element 216 is arranged. In this way, cell-to-cell communication is effectively prevented. With that unwanted cross-coupling between individual power electronic cells 110 can be reduced significantly, further improving a signal-to-noise ratio.

Several features used in known wireless communication systems can be applied in one of the HV installation based on leaky waveguides 120 as discussed above, to improve the system reliability and scalability.

For example, the relatively wide bandwidth of the used waveguide channels, especially at microwave range frequencies, allows frequency diversity and/or frequency multiplexing to be exploited. In the first case, a transceiver such as the hub-side transceiver 214 sends multiple copies of the same signal at different frequency in ranges admitted by the waveguide 120 in order to improve the chances of successful transmission. To improve robustness even further, such an HV installation can be combined with one of the physically redundant communication channels as shown in Figure 10 to further increase the reliability.

In the second case, the same transceiver, such as the hub-side transceiver 214, is equipped with multiple HF modules, each module simultaneously transmitting at different frequency to reach different power electronic cells 110. This facilitates shortening of the communication cycle times or allows to serve more cells 110 in the same cycle time.

Similarly, power electronic cells 110 and control hubs 210 could simultaneously communicate in both directions using different frequencies by employing frequency division duplexing (FDD) to reduce the overall latency of the communication network formed between the components of the HV installation. Equally, cell-to-cell communication can happen at the same time as controller-to-cell communication using different carrier frequencies.

The various components, systems and installations described above have the following benefits: They enable radio frequency and, in particular, microwave frequency communication for high voltage and medium voltage systems as the use of waveguides 120 minimizes the path loss providing a low attenuation propagation channel. At many wavelengths, the communication reliability can be increased or, alternatively, the power and cost of transmitting devices, such as the cell-side transceivers 112 and the hub-side transceivers 214, can be reduced. The waveguides 120 also provide a well-defined propagation path and therefore reduces multipath and cross-path talk defects significantly. They also protect the HF communication signal 124 from external interference, including intentional interference by jammers or similar devices. They enable in particular a waveguide system for microwave communication providing ultra-high bandwidths with the consequence of benefits in terms of low latency and high reliability.

The required HF components have a high maturity and comparatively low component costs. Many high frequency components are available for the considered high frequency communication range.

The leaky waveguide 120 is very well suited for HV application as insulation issues are unlikely to occur. Differences in electrical potential are bridged by free-space HF propagation between the waveguide 120 and the cell-side transceivers 112**.** There is no direct connection between the waveguide system and the cell-side transceivers 112 as required. Multiple optical fibers used in current optical networks of HV and MV applications can be replaced by one single leaky waveguide 120, greatly simplifying the efforts related to structural design, installation, commissioning and maintenance of the optical cables.

The insulation design for the leaky waveguide system can be done by dimensioning the airgap according to established guidelines for insulation in air and will not be significantly influenced by environmental conditions. Moreover, as detailed above, the waveguide 120 itself can be easily protected from environmental influences through use of radomes or similar protection features. Hence, the proposed solution simplifies the insulation design, reduces insulation risk associated with conventional optical fiber networks, and diminishes the need for a climate control compared to fiber-based solutions.

### Reference Signs

- 100: first HV installation
- 110: power electronic cell
- 112: cell-side transceiver
- 114: antenna
- 120: waveguide
- 122: section (of the waveguide)
- 124: HF communication signal
- 126: adjacent area
- 128: opening
- 130: radome
- 132: rectangular slot
- 134: rounded slot
- 136: circular hole
- 138: leaky array antenna
- 200: second HV installation
- 210: control hub
- 212: communication link
- 214: hub-side transceiver
- 216: termination element
- 300: third HV installation
- 312: optical fiber link
- 330: subgroup
- 400: fourth HV installation
- 410: energy storage cabinet
- 412: local control unit
- 414: storage unit
- 416: local wired network
- 502: T-junction
- 504: inverse T-junction
- 510: directional antenna
- 512: patch antenna
- 514: array antenna
- 516: antenna element
- 518: signal pick-up element
- 522: HF lens
- 530: directional coupler

- D: distance
- L: length
- W: width
- R: radius
- I: interval
- X, Y: position
- DX: first distance
- DY: second distance

## Claims

1. A high voltage, HV, installation (100, 200, 300, 400), comprising:
- a plurality of power electronic switching cells (110) configured to operate at different electrical potentials and insulated from one another, each power electronic switching cell (110) comprising a cell-side transceiver (112) with an antenna (114) for receiving and/or transmitting high-frequency, HF, communication signals (124); and
- a waveguide (120) configured to carry and shield HF communication signals (124) of the plurality of power electronic switching cells (110);
**characterized in that**
- the waveguide (120) has a plurality of sections (122) configured to leak HF communication signals (124) present in the waveguide (120) into a corresponding plurality of adjoining areas (126) and vice versa; and
- each power electronic switching cell (110) of the plurality of power electronic switching cells (110) is arranged physically separated and in proximity to the waveguide (120), such that the respective power electronic switching cell (110) is electrically insulated from the waveguide (120) and the antenna (114) of the respective cell-side transceiver (112) is arranged in the respective adjoining area (126).

2. The HV installation (100, 200, 300, 400) of claim 1, wherein the waveguide (120) is configured to carry HF communication signals (124) having a carrier frequency in excess of 1 GHz, preferably in excess of 10 GHz, and/or below 300 GHz and/or having a bandwidth in excess of 20 or 50 MHz or in excess of 2 GHz.

3. The HV installation (100, 200, 300, 400) of claim 1 or 2, wherein the waveguide (120) is configured to carry multiple HF communication signals (124) having different carrier frequencies in parallel, each one of the multiple HF communication signals (124) being received by the cell-side transceivers (112) of at least a subgroup of the plurality of power electronic switching cells (110) to increase at least one of a communication signal transmission redundancy and/or to reduce a communication signal transmission delay.

4. The HV installation (200, 300) of any one of the proceeding claims, further comprising at least one control hub (210) and at least one hub-side transceiver (214) connected to the control hub (210), wherein the at least one control hub (210) is configured to generate HF control signals, comprising one of firing signals and/or synchronization signals, and/or receive HF operating status signals, comprising logging signals, fault recording signals and/or health monitoring signals, for all or at least a subgroup of the plurality of power electronic switching cells (110).

5. The HV installation (300) of claim 4, wherein the at least one hub-side transceiver (214) is attached to a first terminal section of the waveguide (120) and is connected to the at least one control hub (210) using an optical fiber network, such that the waveguide (120) is electrically insulated from the at least one control hub (210).

6. The HV installation (200,300) of claim 4 or 5, wherein at least one of the plurality of sections (122) comprises a directional coupler (530) for coupling HF communication signals (124) transmitted to or received from the respective adjoining area (126) with the at least one hub-side transceiver (214).

7. The HV installation (200, 300) of any one of claims 4 to 6, comprising a redundant communication channel between the plurality of power electronic switching cells (110) and the at least one control hub (210), wherein the redundant communication channel comprises at least one of the following:
- at least two parallel waveguides (120), each one of the at least two parallel waveguides (120) having a plurality of corresponding sections (122) configured to leak the HF communication signals (122) into the corresponding plurality of adjoining areas (126);
- at least two cell-side transceivers (112), each one of the at least-two cell-side transceivers (112) being part of the same power electronic switching cell (110);
- at least two hub-side transceivers (214), each one of the at least-two hub-side transceivers (214) connected to a different terminal section of the waveguide (110); and/or
- at least two control hubs (210), each control hub (210) being configured to provide the HF communication signals (214) for the plurality of power electronic switching cells (110).

8. The HV installation (300) of any one of claims 4 to 7, comprising a plurality of N waveguides (120), each one of the N waveguides (120) having a plurality of sections (122) configured to leak HF communication signals (124) into a corresponding plurality of adjoining areas (126), wherein the plurality of power electronic switching cells (110) is arranged in N subgroups (330), each subgroup (330) corresponding to one of the N waveguides (120), and each power electronic switching cell (110) of one of the subgroups (330) is arranged physically separated and in proximity to the corresponding waveguide (120).

9. The HV installation (300) of claim 8, wherein
- each one of the N waveguides (120) is configured to operate at a different electrical potential, and is connected to a common control hub (210) via an optical fiber network; or
- each one of the N waveguides is configured to operate at the same electrical potential, in particular electrical ground, and is connected to a common control hub (240) via an optical fiber network or a wired HF network.

10. The HV installation (100, 200, 300, 400) of any one of the preceding claims, wherein
- at least one of the antennas (114) of the cell-side transceivers (112) is configured as a first directional antenna (510); and/or
- at least one of the plurality of sections (122) of the waveguide (120) comprises a second directional antenna (510).

11. The HV installation (100, 200, 300, 400) of claim 10, wherein the first directional antenna (510) and/or the second directional antenna (510) comprises one of patch antenna (512) and array antenna (514), a leaky array antenna (136), and/or a horn antenna.

12. The HV installation (100, 200, 300, 400) of claim 10 or 11, further comprising a radome (130) covering the first directional antenna (510) or the second directional antenna (510).

13. The HV installation (100, 200, 300, 400) of any one of the preceding claims, wherein each section (122) of the plurality of sections (122) of the waveguide (120) comprises at least one opening (128), in particular one of a slit (132, 134), a single hole (136), a row of holes (136) or an array of holes (136), the at least one opening (128) configured to leak the HF communication signals (124) into the corresponding plurality of adjoining areas (126).

14. The HV installation (100, 200, 300, 400) of claim 13, further comprising at least one dielectric lens (522) covering the at least one opening (128) of at least one of the plurality of sections (122).

15. The HV installation (100, 200, 300, 400) of any one of the preceding claims, wherein the waveguide (122) comprises at least one of a hollow metallic waveguide, a dielectric waveguide, a coaxial cable, or a stripline waveguide.

## Patentansprüche

1. Hochspannungsanlage, HV-Anlage (100, 200, 300, 400), umfassend:
- eine Mehrzahl von leistungselektronischen Schaltzellen (110), die konfiguriert sind, um mit unterschiedlichen elektrischen Potentialen zu funktionieren, und voneinander isoliert sind, wobei jede leistungselektronische Schaltzelle (110) einen zellenseitigen Transceiver (112) mit einer Antenne (114) zum Empfangen von und/oder zum Senden von Hochfrequenz-Kommunikationssignalen, HF-Kommunikationssignalen (124) umfasst; und
- einen Wellenleiter (120), der konfiguriert ist zum Transportieren und Abschirmen der HF-Kommunikationssignale (124) der Mehrzahl von leistungselektronischen Schaltzellen (110);
**dadurch gekennzeichnet, dass**
- der Wellenleiter (120) eine Mehrzahl von Abschnitten (122) aufweist, die konfiguriert sind, um HF-Kommunikationssignals (124), die in dem Wellenleiter vorhanden sind (120), in eine entsprechende Mehrzahl von angrenzenden Bereichen (126) und umgekehrt austreten zu lassen; und
- alle leistungselektronischen Schaltzellen (110) aus der Mehrzahl von leistungselektronischen Schaltzellen (110) physisch getrennt voneinander und in der Nähe des Wellenleiters (120) angeordnet sind, sodass die jeweilige leistungselektronische Schaltzelle (110) von dem Wellenleiter (120) elektrisch isoliert ist, und die Antenne (114) des jeweiligen zellenseitigen Transceivers (112) in dem jeweiligen angrenzenden Bereich (126) angeordnet ist.

2. HV-Anlage (100, 200, 300, 400) nach Anspruch 1, wobei der Wellenleiter (120) konfiguriert ist zum Transportieren von HF-Kommunikationssignalen (124), die eine Trägerfrequenz von über 1 GHz, vorzugsweise über 10 GHz und/oder unter 300 GHz aufweisen und/oder eine Bandbreite von über 20 oder 50 MHz oder über 2 GHz aufweisen.

3. HV-Anlage (100, 200, 300, 400) nach Anspruch 1 oder 2, wobei der Wellenleiter (120) konfiguriert ist zum Transportieren von mehreren HF-Kommunikationssignalen (124), die parallel unterschiedliche Trägerfrequenzen aufweisen, wobei jedes der mehreren HF-Kommunikationssignale (124) in den zellenseitigen Transceivern (112) von mindestens einer Teilgruppe aus der Mehrzahl von leistungselektronischen Schaltzellen (110) empfangen wird, um mindestens eine von einer Übertragungsredundanz der Kommunikationssignale zu vergrößern und/oder um eine Übertragungsverzögerung der Kommunikationssignale zu reduzieren.

4. HV-Anlage (200, 300) nach einem der vorhergehenden Ansprüche, die ferner mindestens einen Steuer-Hub (210) und mindestens einen Hub-seitigen Transceiver (214) umfasst, der mit dem Steuer-Hub (210) verbunden ist, wobei der mindestens eine Steuer-Hub (210) konfiguriert ist zum Erzeugen von HF-Steuersignalen, die eines von Auslösesignalen und/oder Synchronisationssignalen umfassen, und/oder zum Empfangen von HF-Betriebszustandssignalen, die Anmeldesignale, Fehleraufzeichnungssignale und oder Zustandsüberwachungssignale umfassen, für alle oder mindestens einige aus einer Teilgruppe der Mehrzahl von leistungselektronischen Schaltzellen (110).

5. HV-Anlage (300) nach Anspruch 4, wobei der mindestens eine Hub-seitige Transceiver (214) an einem ersten Klemmenabschnitt des Wellenleiters (120) befestigt ist und mit dem mindestens einen Steuer-Hub (210) verbunden ist, indem ein optisches Glasfasernetzwerk verwendet wird, sodass der Wellenleiter (120) von dem mindestens einen Steuer-Hub (210) elektrisch isoliert ist.

6. HV-Anlage (200, 300) nach Anspruch 4 oder 5, wobei mindestens einer aus der Mehrzahl von Abschnitten (122) einen Richtungskoppler (530) umfasst, um die HF-Kommunikationssignale (124), die zu dem jeweiligen angrenzenden Bereich (126) gesendet werden oder von diesem empfangen werden, mit dem mindestens einen Hub-seitigen Transceiver (214) zu koppeln.

7. HV-Anlage (200, 300) nach einem der Ansprüche 4 bis 6, die einen redundanten Kommunikationskanal zwischen der Mehrzahl von leistungselektronischen Schaltzellen (110) und dem mindestens einen Steuer-Hub (210) umfasst, wobei der redundante Kommunikationskanal mindestens eines der folgenden umfasst:
- mindestens zwei parallele Wellenleiter (120), wobei jeder der mindestens zwei parallelen Wellenleiter (120) eine Mehrzahl von entsprechenden Abschnitten (122) umfasst, die konfiguriert sind, um die HF-Kommunikationssignale (122) in die entsprechende Mehrzahl von angrenzenden Abschnitten (126) austreten zu lassen;
- mindestens zwei zellenseitige Transceiver (112), wobei jeder der mindestens zwei zellenseitigen Transceiver (112) Teil der gleichen leistungselektronischen Schaltzelle (110) ist;
- mindestens zwei Hub-seitige Transceiver (214), wobei jeder der mindestens zwei Hub-seitigen Transceiver (214) mit einem unterschiedlichen Klemmenabschnitt des Wellenleiters (110) verbunden ist; und/oder
- mindestens zwei Steuer-Hubs (210), wobei jeder Steuer-Hub (210) konfiguriert ist, um die HF-Kommunikationssignale (214) für die Mehrzahl von leistungselektronischen Schaltzellen (110) bereitzustellen.

8. HV-Anlage (300) nach einem der Ansprüche 4 bis 7, die eine Mehrzahl von N Wellenleitern (120) umfasst, wobei jeder der N Wellenleiter (120) eine Mehrzahl von Abschnitten (122) aufweist, die konfiguriert sind, um HF-Kommunikationssignale (124) in eine entsprechende Mehrzahl von angrenzenden Bereichen (126) austreten zu lassen, wobei die Mehrzahl von leistungselektronischen Schaltzellen (110) in N Teilgruppen (330) angeordnet sind, wobei jede Teilgruppe (330) einem der N Wellenleiter (120) entspricht, und wobei jede leistungselektronische Schaltzelle (110) von einer der Teilgruppen (330) physisch getrennt von und in der Nähe des entsprechenden Wellenleiters (120) angeordnet ist.

9. HV-Anlage (300) nach Anspruch 8, wobei
- jeder der N Wellenleiter (120) konfiguriert ist, um mit einem unterschiedlichen elektrischen Potential zu funktionieren, und über ein Glasfasernetzwerk mit einem gemeinsamen Steuer-Hub (210) verbunden ist;
oder
- jeder der N Wellenleiter konfiguriert ist, um mit dem gleichen elektrischen Potential, insbesondere einer elektrischen Erdung, zu funktionieren, und über ein Glasfasernetzwerk oder über ein verdrahtetes HF-Netzwerk mit einem gemeinsamen Steuer-Hub (240) verbunden ist.

10. HV-Anlage (100, 200, 300, 400) nach einem der vorhergehenden Ansprüche, wobei
- mindestens eine der Antennen (114) der zellenseitigen Transceiver (112) als eine erste Richtantenne (510) konfiguriert ist; und/oder
- mindestens einer aus der Mehrzahl von Abschnitten (122) des Wellenleiters(120) eine zweite Richtantenne (510) umfasst.

11. HV-Anlage (100, 200, 300, 400) nach Anspruch 10, wobei die erste Richtantenne (510) und/oder die zweite Richtantenne (510) eine von einer Patchantenne (512) und einer Gruppenantenne (514), einer durchlässigen Gruppenantenne (136), und/oder einer Hornantenne umfassen.

12. HV-Anlage (100, 200, 300, 400) nach Anspruch 10 oder 11, die ferner ein Radom (130) umfasst, das die erste Richtantenne (510) oder die zweite Richtantenne (510) abdeckt.

13. HV-Anlage (100, 200, 300, 400) nach einem der vorhergehenden Ansprüche, wobei jeder Abschnitt (122) aus der Mehrzahl von Abschnitten (122) des Wellenleiters (120) mindestens eine Öffnung (128), insbesondere einen von einem Schlitz (132, 134), einem einzigen Loch (136), einer Reihe von Löchern (136) oder einem Array von Löchern (136) umfasst, wobei die mindestens eine Öffnung (128) konfiguriert ist, um die HF-Kommunikationssignale (124) in die entsprechende Mehrzahl von angrenzenden Bereichen (126) austreten zu lassen.

14. HV-Anlage (100, 200, 300, 400) nach Anspruch 13, die ferner mindestens eine dielektrische Linse (522) umfasst, welche die mindestens eine Öffnung (128) der mindestens einen aus der Mehrzahl von Abschnitten (122) abdeckt.

15. HV-Anlage (100, 200, 300, 400) nach einem der vorhergehenden Ansprüche, wobei der Wellenleiter (122) mindestens einen von einem hohlen metallischen Wellenleiter, einem dielektrischen Wellenleiter, einem Koaxialkabel oder einer Streifenleitung umfasst.

## Revendications

1. Installation haute tension, HT, (100, 200, 300, 400), comprenant :
- une pluralité de cellules de commutation électroniques de puissance (110) configurées pour fonctionner à différents potentiels électriques et isolées les unes des autres, chaque cellule de commutation électronique de puissance (110) comprenant un émetteur-récepteur côté cellule (112) avec une antenne (114) pour recevoir et/ou transmettre des signaux de communication haute fréquence, HF, (124) ; et
- un guide d'ondes (120) configuré pour transporter et protéger les signaux de communication HF (124) de la pluralité de cellules de commutation électroniques de puissance (110) ; **caractérisée en ce que**
- le guide d'ondes (120) comporte une pluralité de sections (122) configurées pour laisser passer les signaux de communication HF (124) présents dans le guide d'ondes (120) vers une pluralité correspondante de zones adjacentes (126) et vice versa ; et
- chaque cellule de commutation électronique de puissance (110) de la pluralité de cellules de commutation électronique de puissance (110) est disposée de manière physiquement séparée et à proximité du guide d'ondes (120), de telle sorte que la cellule de commutation électronique de puissance respective (110) soit isolée électriquement du guide d'ondes (120) et que l'antenne (114) de l'émetteur-récepteur côté cellule respectif (112) soit disposée dans la zone adjacente respective (126).

2. Installation HT (100, 200, 300, 400) selon la revendication 1, dans laquelle le guide d'ondes (120) est configuré pour transporter des signaux de communication HF (124) ayant une fréquence porteuse supérieure à 1 GHz, de préférence supérieure à 10 GHz, et/ou inférieure à 300 GHz et/ou ayant une largeur de bande supérieure à 20 ou 50 MHz ou supérieure à 2 GHz.

3. Installation HT (100, 200, 300, 400) selon la revendication 1 ou la revendication 2, dans laquelle le guide d'ondes (120) est configuré pour transporter en parallèle plusieurs signaux de communication HF (124) ayant des fréquences porteuses différentes, chacun des multiples signaux de communication HF (124) étant reçu par les émetteurs-récepteurs côté cellule (112) d'au moins un sous-groupe de la pluralité de cellules de commutation électronique de puissance (110) afin d'augmenter au moins l'une d'une redondance de transmission de signaux de communication et/ou de réduire un retard de transmission de signaux de communication.

4. Installation HT (200, 300) selon l'une quelconque des revendications précédentes, comprenant en outre au moins un concentrateur de commande (210) et au moins un émetteur-récepteur côté concentrateur (214) connecté au concentrateur de commande (210), où l'au moins un concentrateur de commande (210) est configuré pour générer des signaux de commande HF, comprenant l'un des signaux de déclenchement et/ou des signaux de synchronisation, et/ou pour recevoir des signaux d'état de fonctionnement HF, comprenant des signaux d'enregistrement, des signaux d'enregistrement de défaut et/ou des signaux de surveillance de l'état, pour la totalité ou au moins un sous-groupe de la pluralité de cellules de commutation électroniques de puissance (110).

5. Installation HT (300) selon la revendication 4, dans laquelle l'au moins un émetteur-récepteur côté concentrateur (214) est fixé à une première section terminale du guide d'ondes (120) et est connecté à l'au moins un concentrateur de commande (210) à l'aide d'un réseau de fibres optiques, de telle sorte que le guide d'ondes (120) est isolé électriquement de l'au moins un concentrateur de commande (210).

6. Installation HT (200, 300) selon la revendication 4 ou la revendication 5, dans laquelle au moins une de la pluralité de sections (122) comprend un coupleur directionnel (530) pour coupler des signaux de communication HF (124) transmis vers ou reçus de la zone adjacente respective (126) avec l'au moins un émetteur-récepteur côté concentrateur (214).

7. Installation HT (200, 300) selon l'une quelconque des revendications 4 à 6, comprenant un canal de communication redondant entre la pluralité de cellules de commutation électronique de puissance (110) et l'au moins un concentrateur de commande (210), où le canal de communication redondant comprend au moins l'un des éléments suivants :
- au moins deux guides d'ondes parallèles (120), chacun des au moins deux guides d'ondes parallèles (120) comportant une pluralité de sections correspondantes (122) configurées pour laisser passer les signaux de communication HF (122) dans la pluralité correspondante de zones adjacentes (126) ;
- au moins deux émetteurs-récepteurs côté cellule (112), chacun des au moins deux émetteurs-récepteurs côté cellule (112) faisant partie de la même cellule de commutation électronique de puissance (110) ;
- au moins deux émetteurs-récepteurs côté concentrateur (214), chacun des au moins deux émetteurs-récepteurs côté concentrateur (214) étant connecté à une section terminale différente du guide d'ondes (110) ; et/ou
- au moins deux concentrateurs de commande (210), chaque concentrateur de commande (210) étant configuré pour fournir les signaux de communication HF (214) à la pluralité de cellules de commutation électronique de puissance (110).

8. Installation HT (300) selon l'une quelconque des revendications 4 à 7, comprenant une pluralité de N guides d'ondes (120), chacun des N guides d'ondes (120) comportant une pluralité de sections (122) configurées pour laisser passer des signaux de communication HF (124) dans une pluralité correspondante de zones adjacentes (126), où la pluralité de cellules de commutation électroniques de puissance (110) est agencée en N sous-groupes (330), chaque sous-groupe (330) correspondant à l'un des N guides d'ondes (120), et chaque cellule de commutation électronique de puissance (110) de l'un des sous-groupes (330) est agencée de manière physiquement séparée et à proximité du guide d'ondes correspondant (120).

9. Installation HT (300) selon la revendication 8, dans laquelle
- chacun des N guides d'ondes (120) est configuré pour fonctionner à un potentiel électrique différent et est connecté à un concentrateur de commande commun (210) par l'intermédiaire d'un réseau de fibres optiques ;
ou
- chacun des N guides d'ondes est configuré pour fonctionner au même potentiel électrique, en particulier à la terre électrique, et est connecté à un concentrateur de commande commun (240) par l'intermédiaire d'un réseau de fibres optiques ou d'un réseau HF câblé.

10. Installation HT (100, 200, 300, 400) selon l'une quelconque des revendications précédentes, dans laquelle
- au moins une des antennes (114) des émetteurs-récepteurs côté cellule (112) est configurée en tant que première antenne directionnelle (510) ; et/ou
- au moins une de la pluralité de sections (122) du guide d'ondes (120) comprend une deuxième antenne directionnelle (510).

11. Installation HT (100, 200, 300, 400) selon la revendication 10, dans laquelle la première antenne directionnelle (510) et/ou la deuxième antenne directionnelle (510) comprend l'une parmi une antenne patch (512) et une antenne réseau (514), une antenne réseau rayonnante (136) et/ou une antenne cornet.

12. Installation HT (100, 200, 300, 400) selon la revendication 10 ou la revendication 11, comprenant en outre un radôme (130) recouvrant la première antenne directionnelle (510) ou la deuxième antenne directionnelle (510).

13. Installation HT (100, 200, 300, 400) selon l'une quelconque des revendications précédentes, dans laquelle chaque section (122) de la pluralité de sections (122) du guide d'ondes (120) comprend au moins une ouverture (128), en particulier l'une parmi une fente (132, 134), un trou unique (136), une rangée de trous (136) ou un réseau de trous (136), l'au moins une ouverture (128) étant configurée pour laisser passer les signaux de communication HF (124) dans la pluralité correspondante de zones adjacentes (126).

14. Installation HT (100, 200, 300, 400) selon la revendication 13, comprenant en outre au moins une lentille diélectrique (522) recouvrant l'au moins une ouverture (128) d'au moins une de la pluralité de sections (122).

15. Installation HT (100, 200, 300, 400) selon l'une quelconque des revendications précédentes, dans laquelle le guide d'ondes (122) comprend au moins l'un parmi un guide d'ondes métallique creux, un guide d'ondes diélectrique, un câble coaxial ou un guide d'ondes à ruban.
